# EUROPEAN PATENT APPLICATION

(11) **EP 2 385 452 A1**
(43) Date of publication of application: **09.11.2011**
(21) Application number: 10305477.1
(22) Date of filing: 06.05.2010
(51) Int. Cl.: G06F 3/048, G06F 17/24

(54) **Computer navigation method**

(71) Applicant: Amadeus S.A.S., 06410 Biot (FR)
(72) Inventor: Mouyade, Jean, 06550 LA ROQUETTE SUR SIAGNE (FR); Chauvin, Stéphane, 06560 VALBONNE (FR); Bzodek, Gaëtan, 06530 PEYMEINADE (FR); Guillon, Léa, 06160 JUAN LES PINS (FR)
(74) Representative: Decobert, Jean-Pascal

(57) **Abstract**

A computer navigation method characterized by comprising the steps of:
■ Determining the position on screen of a first widget (3) in focus,
■ Associating at least one widget (5) out of focus with at least one key of a keyboard,
■ Determining the geometric distance between the first widget (3) in focus and at least one widget (5) out of focus,
■ When said key is stroke, identifying the shortest geometric distance between the first widget (3) in focus and at least one widget associated with said stroke key, and
■ moving the focus from the first widget (3) to the widget located at said shortest geometric distance from the first widget (3) and being associated to the stroke key.

## Description

The present invention relates in general to the domain of computers. More specifically the present invention relates to a navigation method for web sites.

In general, when navigating around web sites on the Internet, different navigation tools are proposed to the user to facilitate the navigation. One efficient tool is the well known mouse. The mouse makes it easier to quickly move from one position on the screen to another in one simple hand gesture.

However, for the experienced professional user who spends most of the day in front of a computer entering data, filling in text fields and completing forms of different nature, the mouse presents a drawback since only one hand can be on the keyboard while operating the mouse. That makes the user switching one hand forth and back between the keyboard and the mouse, which is a time consuming inconvenience.

To solve that problem, the document US6654038 discloses a keyboard based software that defines a key event to trigger a navigation command whenever entered. The navigation command is ordering focus to a non focused element on the web page. After the command is entered, the user needs to enter an exit character. This is an awkwardly long process just to change focus from one element to another. The user must trigger the software by entering a specific character, entering the command that switches the focus from one element to another and finally enter an exit character to return to normal text entry mode.

Another familiar prior art, is the "Tab"-key present on most keyboards. The Tab key is the favorite option for a lot of professionals having to fill in data and enter text in web pages, since they will have to switch focus from one widget to another all day.

The Tab-key makes it possible for a user browsing a web page, to jump from one control or widget to another in a certain order. Starting from the top left corner on a web page, the order is similar to a normal reading pattern: from left to right and from top to bottom within the same frame or window. For example if a widget is in focus, pressing the Tab key changes the focus to the next widget to the right on the same line. If there is no widget on the right side of the widget in focus, the utmost left widget on the next line underneath the line comprising the active widget is then selected and so on.

The Tab key however also presents a huge inconvenience since it always selects the next widget according to this above-described pattern even though this is not the interesting widget to focus on for the user. In fact, the user can only select a specific widget of interest by tabbing through a number of widgets without interest. This is an annoying process, which requires the user's full attention to avoid tabbing over the interesting widget. If that happens, a whole tabbing cycle should be repeated. Reversed tabbing, which is reverse order of normal tabbing, is also possible but requires holding down one more key while tabbing. It is usually the Shift key, which is present on most keyboards.

The present invention aims to provide a method that makes it easier to navigate from one widget to another in web pages without relying on a mouse or other external input device than the actual keyboard.

Also, the invention is proposing a solution that is less complex than what is disclosed in the prior art and more intuitive for the user than the Tab key.

In a more specific manner, the present invention relates to a computer navigation method comprising the steps of:
■ Determining the position on screen of a first widget in focus,
■ Associating at least one widget out of focus with at least one key of a keyboard,
■ Determining the geometric distance between the first widget in focus and at least one widget out of focus,
■ When said key is stroke, identifying the shortest geometric distance between the first widget in focus and at least one widget associated with said stroke key, and
■ moving the focus from the first widget to the widget located at said shortest geometric distance from the first widget and being associated to the stroke key.

By the term widget, we mean all type of controls as text fields, scroll down lists, radio buttons and so on. Roughly, every element you use the tab key for when switching from one active element to another in a web page is a control or a widget.

The at least one widget out of focus is at least partially visible to the user on screen. The user should be able to see the widget entirely or at least some of it on screen to change the focus to it.

In one embodiment, the first widget in focus is comprised within a first window and at least one widget out of focus is comprised within a second window. Changing focus from one widget to another is in fact independent of the web page windows. As stated earlier, the widget should however be visible on the screen for a user to change focus to it.

Furthermore, the first window comprising the first widget can partially overlap the second window comprising the at least one widget out of focus. In fact multiple windows can be overlapping each other. However, if a widget comprised in one of these partially hidden windows is at least partially visible, then the widget can be focused on according to the invention.

Also the at least one key is configured to function as a directional key.

The at least one widget out of focus is associated with one of the four directional keys on the keyboard according to a predefined algorithm. The four directional keys could in principle be any four keys functioning as directional keys, including the directional keys on the numerical keypad (keys: "4", "8"," 2", "6") or the keys: "a", "s", "d", "w", which are well-known for replacing directional keys as well.

In another embodiment, one widget is associated with more than one key. Several keys on a keyboard may have the same function. As the example from above, the keys "4", "8"," 2", "6" can have the same function as the directional arrow keys. Therefore a widget can be associated to e.g. both the left arrow key and the key "4" since their function is identical.

The algorithm comprises the steps of:
■ Determining the position on screen of the first widget in focus as the position of an reference point of the first widget,
■ Dividing the screen into four sections, where the four sections meet in the reference point of the first widget,
■ Assigning each section to a directional key of a connected keyboard,
■ Determining the position on screen of the widgets out of focus as the position of a reference point of the widgets, and
■ Mapping every widget on screen into one of the four sections being assigned to a key.

In one embodiment the reference point of a widget is defined as the top left corner of the widget. Any other clearly defined point of a widget can be used as a reference point.

A neighboring key is considered stroke, when a section does not contain any widgets and the key assigned to that section is stroke. The neighboring key is selected as being the closest key according to an anticlockwise path.

The invention further comprises a computer program comprising the above-mentioned algorithm.

The invention further comprises a computer terminal comprising the just mentioned computer program.

The present invention will now be described in details with reference to the drawings for the purpose of illustrating the preferred embodiment.
Figure 1 illustrates an example of a change of focus of a widget according to the present invention.
Figure 2 illustrates a close-up of the part defined by the dotted line in fig 1.

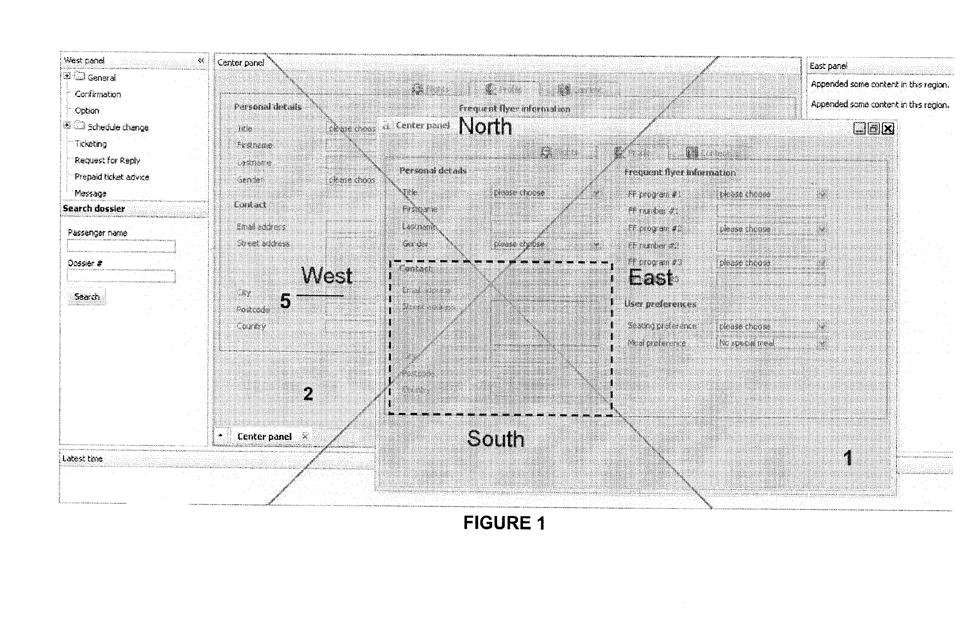

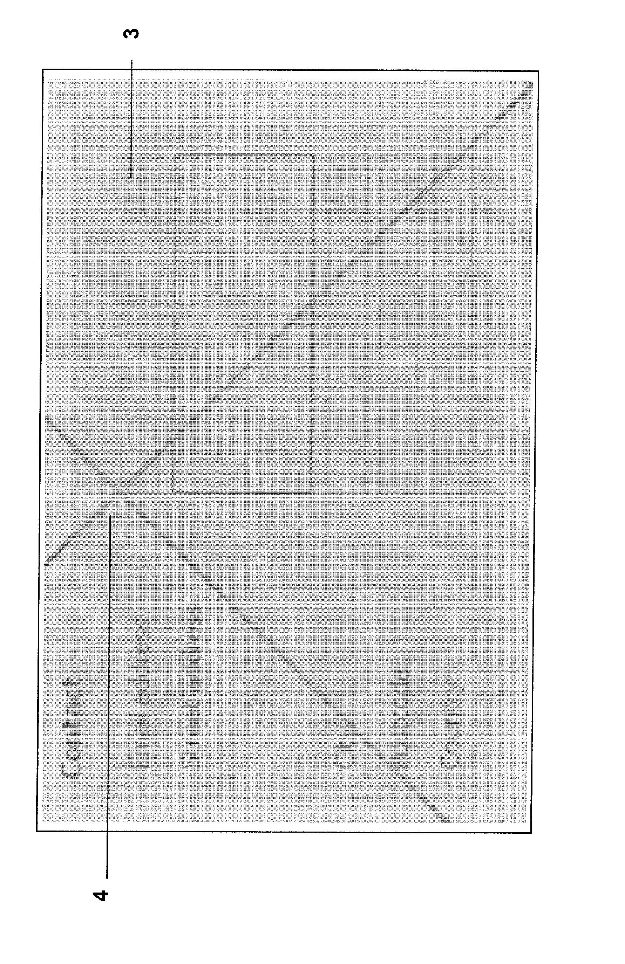

In figure 1 we see two web pages: a first active web page 1 overlapping a second passive web page 2. In this example, the focus is on the text field widget adapted to receive an email address. The mentioned widget is represented in figure 2 with the reference number 3. All the other shown widget in form of text input fields, drop down lists radio buttons and so on, are passive widgets or widgets out of focus.

After entering the email address in the email address widget 3, the user might want to move on to another widget to enter or choose further information. If the user wishes to move the focus to the field underneath to fill out his street address, pressing the Tab-key according to the prior art would make that happen.

However if the user want to move the focus to another widget e.g. he forgot to type in his first name, then by using the Tab-key, he will have to tab his way through all the widgets on the page until the tab loop starts over again. That process can easily make a user pressing the same key ten times or more.

Even worse, if he wants to move the focus to a widget in another window, he will need to select the window first using the mouse or by pressing a key combination like Alt + Tab a certain amount of times, and then tabbing through the widgets on that page, until he arrives to the widget he wishes to move the focus onto.

According to the present invention an onscreen widget can become in focus relatively easily independent on which frame or window it is comprised in.

For that purpose, an algorithm is provided. The algorithm starts by defining the position of the widget already focused on. In the present example it's the widget 3. The position of the widget should be defined by a single reference point 4. For the purpose of illustrating this preferred embodiment, the reference point 4 has been chosen to be the top left corner. Any other point comprised within the widget or at a specific distance from the widget can equally be used as reference point.

So the position of the widget is considered to be the position of its top left corner.

As shown in figure 1, the screen is split into four substantially equally sized sections. The four sections are referred to as: west, north, east and south. The sections are defined by two virtual perpendicular lines, crossing each other in the reference point 4 of the widget 3 being focused on.

In one embodiment according to figure 1, the sections are defines by angles.
■ The west section has an angle between 135 and 225 degrees.
■ The north section has an angle between 45 and 135 degrees.
■ The east section has an angle between 0 and 45 or between 135 and 360 degrees.
■ The south section has an angle between 225 and 315 degrees.

The four sections are associated to four directional keys on the keyboard. The section west is associated with a left directional key on the keyboard, the section north is associated with an up directional key, the section east is associated with a right directional key on the keyboard and the section south is associated with a down directional key.

Several groups of directional keys can be used individually or together. The keys "A", "S", "W" and "D" are for example often used as equivalent to the directional arrow keys. In the same manner the west section could be associated with the "A" key, the north section with the "w" key, the east section with the "D" key and the south section with the "S" key.

It is also possible that one section is associated to several directional keys with an identical function. For example having the east section associated with both the left arrow key and the "A" key.

In that manner, every widget with a position within the east section in a preferred embodiment of figure 1, will be associated with the right directional key on the keyboard, all the widgets in the north section will be associated with the up directional key, all the widgets in the south section will be associated with the down directional key and all the widgets in the west section will be associated with the left directional key.

As can be seen from figure 1, the west section comprises widgets from two windows: The active window and the passive window partially hidden behind the active one.

The revealed widgets of the partially hidden window are also attributed a key like the widgets from the active window. So the left key in this example is associated to widgets from two different windows.

To determine which widget is within which section, the position of the widget is defined by the position of its top left corner. Hence if the top left corner of a widget is in a specific section, then the widget is in the same section.

Obviously, partially revealed widgets will be associated to a section and thereby a key, if the top left corner is not hidden. If the reference point, which is the top left corner in the present example, is hidden, then the widget is not taken into account and is therefore not associated to a section and thereby not associated to a key.

If a user wants to change focus from the widget in focus 3, to another widget out of focus, the user pushes a directional key. The invention is very intuitive to the user since it uses the widget in focus 3 as a starting point. If the user the wants to focus on a widget left from the widget in focus , then the left directional key should be pressed and so on.

Pressing the left directional key on the keyboard, will initiate a calculation of the shortest distance between every widget in the west sector and the widget in focus 3.

In another embodiment, this calculation is done beforehand for every directional key, each time the focus changes from one widget to another.

The widget located at the shortest distance from the widget in focus 3 and located in the west sector, is selected as the new widget in focus. In the example of figure 1, that widget is the text field named "city" with the reference number 5.

If this widget wasn't the one intended to highlight by the user, but he wanted to focus on the text field called "post code", then the operation starts over with a new widget 5 as starting point. In a very intuitive manner, the user merely has to press the down directional key to focus on the widget intended to focus on.

In one embodiment, if no widgets are present in a section, and a directional key associated to that section is still pressed by a user, then the neighboring section is chosen. The neighboring section is chosen according to an anti-clockwise path. Other paths could be chosen as well.

So assuming that no widgets are to be found in the north section and a user presses the up directional key on a connected keyboard, then the west section will be selected as if the user had pressed the left directional key instead.

Although illustrative embodiments of the present invention have been described in detail with reference to the accompanying drawings, it is to be understood that the invention is not limited to those precise embodiments and that changes and modifications may be effected therein by those in the art without departing from the scope and spirit of the invention.

## Claims

1. A computer navigation method **characterized by** comprising the steps of:
■ Determining the position on screen of a first widget (3) in focus,
■ Associating at least one widget (5) out of focus with at least one key of a keyboard,
■ Determining the geometric distance between the first widget (3) in focus and at least one widget (5) out of focus,
■ When said key is stroke, identifying the shortest geometric distance between the first widget (3) in focus and at least one widget associated with said stroke key, and
■ moving the focus from the first widget (3) to the widget located at said shortest geometric distance from the first widget (3) and being associated to the stroke key.

2. A computer navigation method according to claim 1, wherein said at least one widget (5) out of focus is at least partially visible to the user on screen.

3. A computer navigation method according to any of the preceding claims, wherein said first widget (3) in focus is comprised within a first window (1) and said at least one widget (5) out of focus is comprised within a second window (2).

4. A computer navigation method according to claim 3, where said first window (1) comprising said first widget (3) is partially overlapping said second window (2) comprising at least said one widget (5) out of focus.

5. A computer navigation method according to any of the preceding claims, wherein said at least one key is configured to function as a directional key.

6. A computer navigation method according to any of the preceding claims, wherein said at least one widget (5) out of focus is associated with one of the four directional keys on the keyboard according to a predefined algorithm.

7. A computer navigation method according to claim 6, where said algorithm comprises the steps of:
■ Determining the position on screen of the first widget (3) in focus as the position of an reference point (4) of said first widget,
■ Dividing the screen into four sections, said four sections meet in said reference point (4) of the first widget (3),
■ Assigning each section to a directional key of a connected keyboard,
■ Determining the position on screen of the widgets out of focus as the position of a reference point (4) of said widgets, and
■ Mapping every widget on screen into one of the four sections being assigned to a key.

8. A computer navigation method according to claim 7, where said absolute positioning point of a widget is defined as the top left corner of the widget (3).

9. A computer navigation method according to claims 7 and 8, where a neighboring key is considered stroke, when a section does not contain any widgets and the key assigned to that section is stroke.

10. A computer navigation method according to claim 9, where said neighboring key is selected as being the closest key according to an anticlockwise path.

11. A computer program comprising said algorithm of claim 7.

12. A computer terminal comprising the computer program of claim 11.
